# EUROPEAN PATENT SPECIFICATION

(11) **EP 3 715 771 B1**
(45) Date of publication and mention of the grant of the patent: **10.07.2024**
(21) Application number: 20164154.5
(22) Date of filing: 19.03.2020
(51) Int. Cl.: F41H 5/26, F41H 5/04

(54) **BULLETPROOF GLAZING FOR USE IN VEHICLES**
SCHUSSSICHERE SCHEIBE ZUR VERWENDUNG IN FAHRZEUGEN
VITRAGE PARE-BALLES POUR UNE UTILISATION DANS DES VÉHICULES

(30) Priority: 26.03.2019 BR 102019005976
(43) Date of publication of application: 30.09.2020
(73) Proprietor: Pg Products Indústria e Comércio de Vidros Ltda., 06711-270 Cotia SP (BR)
(72) Inventor: Lazzari, Fernando Alonso, 06539-040 Santana de Parnaíba SP (BR); Yoshikuma, Edson Maury, 06711-270 Cotia SP (BR)
(74) Representative: Calysta NV

(56) References cited:
- BR-A2- PI0 804 803
- DE-A1- 102008 028 318
- DE-A1- 19 539 607
- DE-A1- 3 243 136

## Description

The present invention refers to bulletproof glazing or glass preferably for use in mobile windows, fixed windows and/or roofs of road, military or off-road vehicles and agricultural machinery.

### Description of the State of The Art

With the progressive increase in rates of violence around the world, the armored vehicle market has expanded and, with it, the need for innovations in bulletproof components, whether opaque or transparent, which form part of the end products.

The protection levels of bulletproof components and products are divided in accordance with the technical standards of their respective markets of use.

The solutions for addressing the different levels are numerous, with the various manufacturers possessing different "composition recipes" to address one or more levels.

Thus, the number of internal layers of different transparent polymeric materials, and the number of sheets of glass and/or the thickness of these materials within a composition has become immaterial.

Similarly, with the continuous launch of new models of vehicles, bulletproof glazing has sought to replace the original (non-bulletproof) glazing of a vehicle, hence the existence of the many shapes and geometries thereof.

Regardless of the level of ballistic resistance adopted for a given application or product, the safety and survival of the occupants of the passenger compartment of an armored vehicle resistant to shots from firearms depends on mobility. Which is to say, once an attack has started, with each additional assault, the armor becomes increasingly compromised. As a result, escaping from the location becomes imperative.

Vehicle armor encompasses the protection of the passenger compartment and the vital parts of a vehicle, which must ensure the opportunity to escape and/or avoid the site of the attack. This escape must occur without the passenger compartment being perforated or penetrated, and under conditions where the vehicle can move without risk of fire.

The armoring process, based on a prior design, involves the total armoring of the passenger compartment and the partial armoring of other critical parts that may prevent escape, consisting of armoring through the application of bulletproof components and/or materials, combining transparent (such as glass) and opaque (such as steel and mantles) elements.

In conventional armor, the fixed glazing is housed in its insets and fixed by chemical adhesion (gluing). In turn, mobile glazing is fixed on supports by mechanical and/or chemical means.

Such conventional armor and mobile glazing can be seen in documents DE3243136A1, DE102008028318A1 and BRPI0804803 A2.

Specifically, document DE3243136A1 refers to a laminated glass block held in a metal frame for viewing slots of armored vehicles, while document DE102008028318 A1 refers to a laminated glass block that consists of several plates made of a first transparent material, which are arranged one behind the other at a distance from each other in the threat direction and between which an intermediate layer made of a second transparent material.

With respect to document BRPI0804803A2 it refers to ballistic glass, which has an outer blade, a first plastic layer, a second plastic layer, a steel layer, a third and a fourth plastic layers plus a bevel on the outer blade, wherein the bevel is level with the first plastic layer and a steel layer.

In this scenario, the present invention provides a safest glazing and a more efficient and effective sealing when comparing to the state of the art.

### Objectives of the Invention

The objective of this invention is to provide bulletproof glazing which, in addition to providing a less costly armor design in terms of materials and labor expended, thus reducing installation times, allows for the obtention of thinner glass, which is to say, of reduced thickness, which is thus lighter, and that also provides a more efficient and effective sealing, especially of mobile glazing, endowing the closing region with a sloped surface in relation to the normal (perpendicular) surface of the glass, thus enabling the deflection of potential projectiles in this region due to the decomposition of the vector of the projectile.

### Brief Description of the Invention

The objectives of this invention are achieved by a bulletproof glass for use in vehicles as defined in independent claim 1.

### Brief Description of the Drawings

The present invention will be described below in more detail based on an example of execution represented in the drawings. The fig-ures show:
Figure 1 - a schematic view of a first example of mobile or fixed side glass of a vehicle door;
Figure 2 - a schematic view of a first example of mobile or fixed upper glass of a vehicle roof;
Figure 3 - a cut-away view of a first constructive configuration of the present invention, hereafter referred to as constructive variant 1, in accordance with figures 1 and 2;
Figure 4 - a schematic view of a second example of mobile or fixed side glass of a vehicle door;
Figure 5 - a schematic view of a second example of mobile or fixed upper glass of a vehicle roof;
Figure 6 - a cut-away view of a second constructive configuration of the present invention, hereafter referred to as constructive variant 2, in accordance with figures 4 and 5;
Figure 7 - a detailed view of the Z-Z cross-section illustrated in Figure 6;
Figure 8 - a cut-away view of a third constructive configuration of the present invention, hereafter referred to as constructive variant 3;
Figure 9 - a detailed view of the Z-Z cross-section illustrated in Figure 8;
Figure 10 - a schematic view of a third example of mobile or fixed side glazing of a vehicle door;
Figure 11 - a schematic view of a third example of mobile or fixed upper glazing of a vehicle roof; and
Figure 12 - a cut-away view of a fourth constructive configuration of the present invention, hereafter referred to as constructive variant 4, in accordance with figures 10 and 11.

### Detailed Description of Drawings

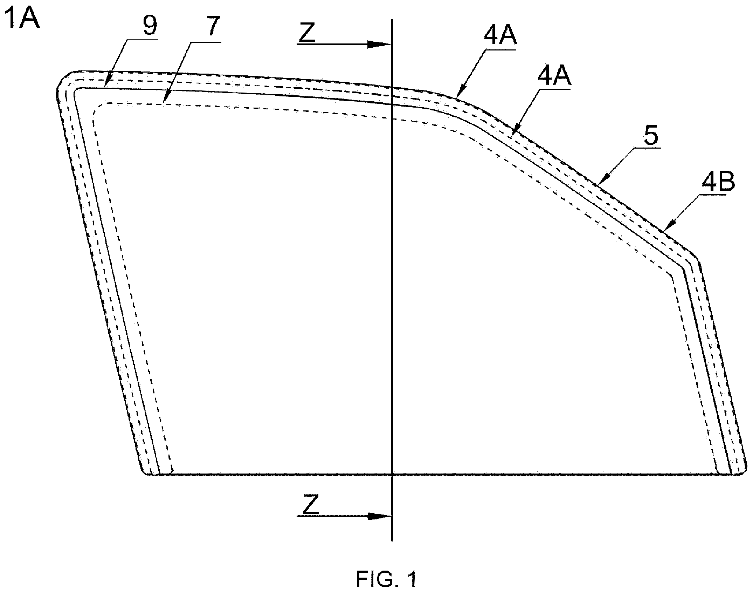

Figures 1 to 12 illustrate examples of execution of the bulletproof glazing in accordance with the present invention. It should be noted that the views represented in figures 1, 2, 4, 5, 10 and 11 refer to internal views, which is to say, as observed inside a vehicle.

Referring to figures 1 to 3, a first constructive configuration of the bulletproof glass of the present invention is illustrated.

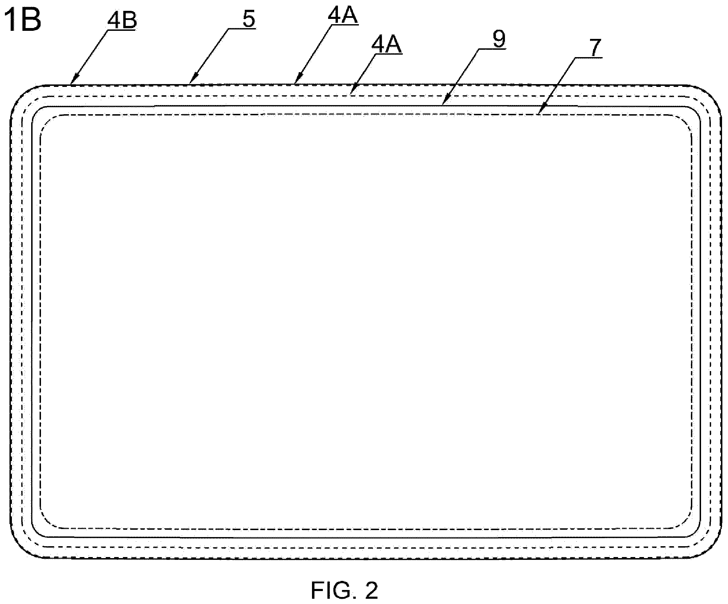

In particular, Figure 1 refers to a first example of mobile or fixed side glazing 1A applied to a vehicle door and Figure 2 refers to a first example of mobile or fixed upper glazing 1B applied to a vehicle roof.

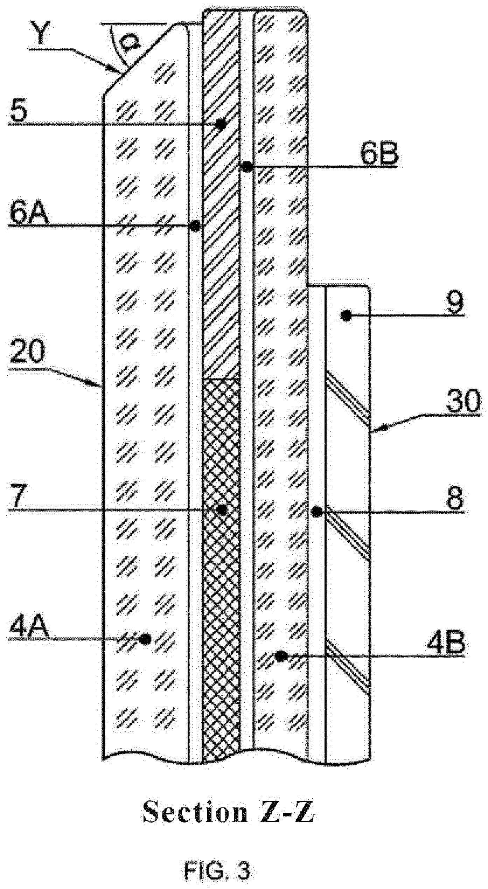

Figure 3 illustrates a Z-Z cross-section view, shown in Figure 1, defining the first constructive configuration of the bulletproof glass of the present invention, constructive variant 1, comprising an external surface 20 facing the outside of the vehicle and an internal surface 30 facing the inside of the vehicle, the glazing comprising a combination of sheets 4A, 5, 4B, 9 of different materials and intermediate layers 6A, 6B, 8 interposed between the sheets 4A, 5, 4B, 9.

The combination of sheets 4A, 5, 4B, 9 comprises a more external sheet of glass 4A, a first intermediate sheet 5 corresponding to an insert or support of metallic material, a second intermediate sheet 4B of glass and a more internal sheet 9 that is formed of an anti-shatter material, e.g. a polycarbonate.

The intermediate layers 6A, 6B, 8 are formed of polymeric materials and function as adhesion layers between the sheets 4A, 5, 4B, 9. The first and second intermediate layers 6A, 6B are formed, preferably, but not necessarily, of polyvinyl butyral, while the third intermediate layer 8 is formed, preferably, but not necessarily, of polyurethane.

Additionally, the structure of the bulletproof glass comprises a filling layer 7, interposed between the outermost sheet 4A and the second intermediate sheet 4B, on which the first intermediate sheet 5 rests, the filling layer 7 being formed of a polymeric or ceramic material, for example, polyvinyl butyral or glass.

As can be seen in Figure 3, the outermost sheet 4A is endowed with a chamferY defined from an angle α facing the outer surface 20 of the glass.

Figures 1 and 2 illustrate the first example of side glazing 1A and upper glazing 1B presenting a semi-perimeter/perimeter possessing a chamfer Y on the outermost sheet 4A, a semi-perimeter/perimeter of the first and second intermediate sheets 5, 4B and a semi-perimeter/perimeter of the innermost sheet 9. It can be observed that in the case of the side glazing 1A, the chamfer Y is positioned in part of the perimeter, while in the case of the upper glazing 1B, the chamfer Y is located in the entire perimeter.

The chamfer Y, positioned at least on the outermost sheet 4A, facilitates the fitting of the glass in the application, in particular due to the angle α which, in addition to assisting in the positioning and assembly of the glass, allows a sealing thereof with the housing of the glass in the body of the vehicle, thereby preventing water infiltrations, the passage of air/wind passages and vibrations.

In Figure 3, the angle α, taken from a portion of the upper end of the outermost sheet 4A, results in the wedge-shaped chamfer Y The angle α ranges from 30° to 75°, being preferably equal to 60°, in accordance with the application (vehicle).

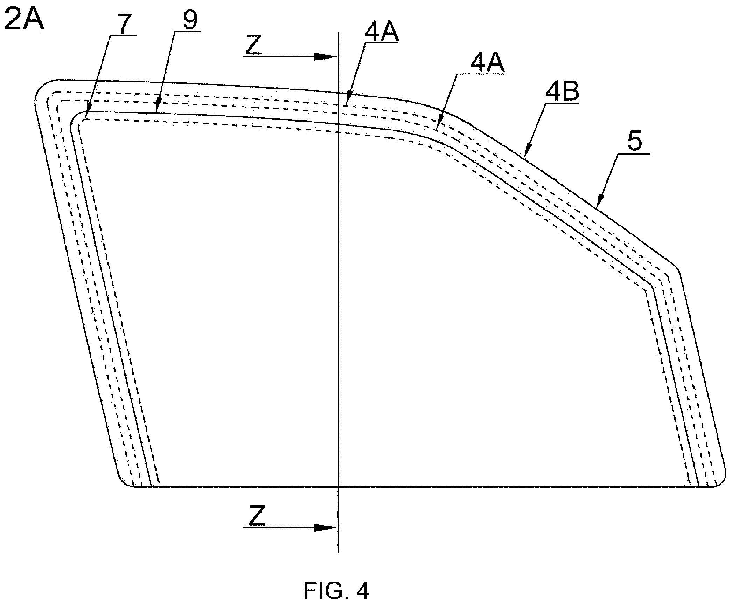

Referring to figures 4 to 7, a second constructive configuration of the bulletproof glass of the present invention is illustrated.

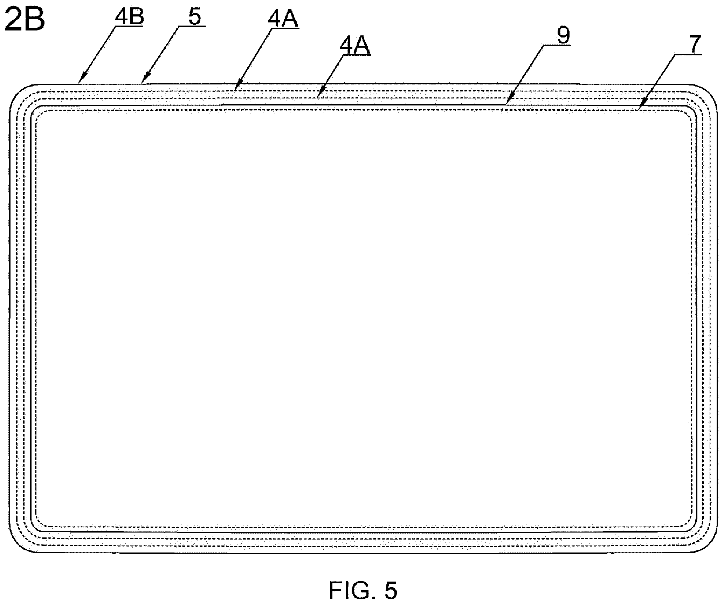

In particular, Figure 4 refers to a second example of mobile or fixed side glazing 2A applied to a vehicle door and Figure 5 refers to a second example of mobile or fixed upper glazing 2B applied to a vehicle roof.

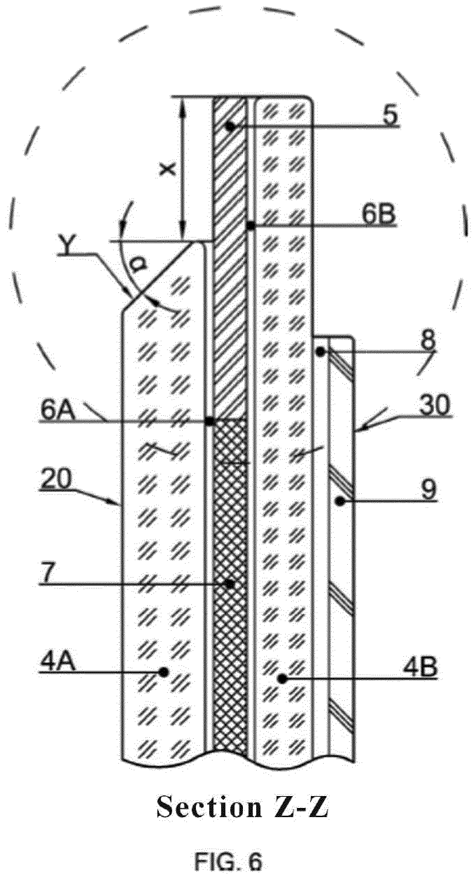

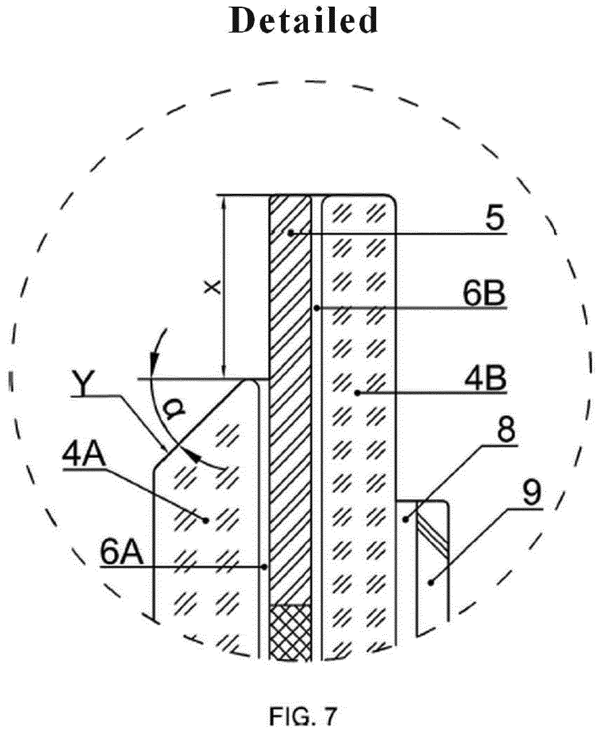

Figures 6 and 7 illustrate a Z-Z cross-section view, shown in Figure 4, defining the second constructive configuration of the bulletproof glass of the present invention, constructive variant 2, comprising a combination of sheets 4A, 5, 4B, 9 and intermediate layers 6A, 6B, 8, similar to the first constructive configuration described above.

However, as can be seen in figures 6 and 7, the outermost sheet 4A, in addition to being equipped with the chamfer Y, possesses a setback distance X, measured between a portion of the upper end of the outermost sheet 4A and a portion of the upper end of the first intermediate sheet 5 and the second intermediate sheet 4B. It is also observed that the first intermediate layer 6A is also withdrawn to the setback distance X.

Figures 4 and 5 illustrate the second example of side glazing 2A and upper glazing 2B presenting a semi-perimeter/perimeter equipped with a chamfer Y and setback distance X on the outermost sheet 4A, a semi-perimeter/perimeter of the first and second intermediate sheets 5, 4B and a semi-perimeter/perimeter of the innermost sheet 9. It is observed that in the case of the side glazing 2A, the chamfer Y and the setback distance X are located in part of the perimeter, while in the case of the upper glazing 2B, the chamfer Y and the setback distance X are located in the entire perimeter.

As illustrated in figures 6 and 7, the setback distance X, measured from the separation of the upper end portion of the outermost sheet 4A of the edge of the glazing, increases the support or retention surface of the glazing in the frame or housing of the application, to facilitate assembly and fixing in the grooves of the application of mobile and/or fixed parts.

Additionally, the outermost sheet 4A, designed for the outer side of the glazing, transfers the ballistic block outside the passenger compartment/vehicle, increasing its internal space and avoiding reworking of the upholstery in the installation process.

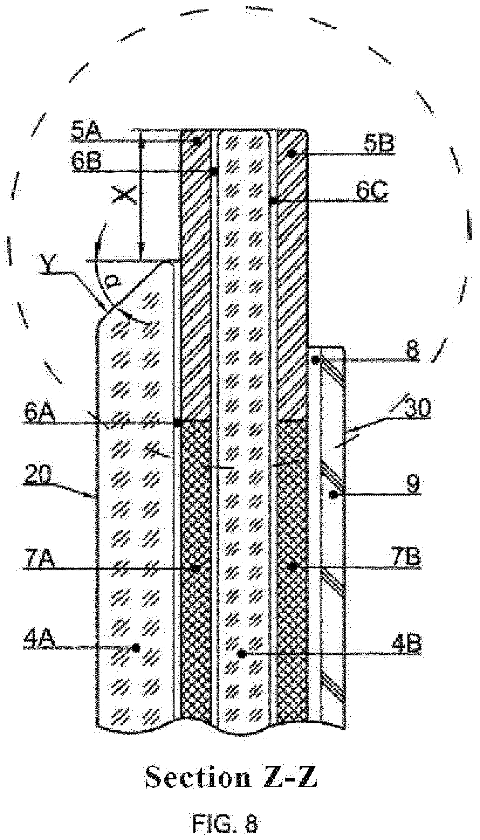

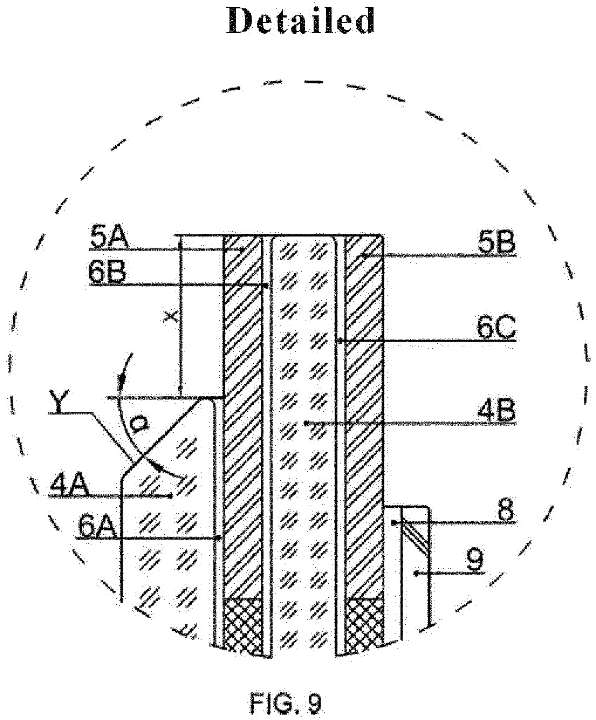

Figures 8 and 9 illustrate a third constructive configuration of the bulletproof glass of the present invention, constructive variant 3, which has a similar construction to the second constructive configuration, but comprising a third intermediate sheet 5B that corresponds to an additional metal insert/support.

In this regard, the third constructive configuration comprises a more external sheet 4A of glass, a first intermediate sheet 5A that corresponds to an insert or support of metallic material, a second intermediate sheet 4B of glass, a third intermediate sheet 5B that corresponds to an insert or support of metallic material and a more internal sheet 9 which is formed of an anti-shatter material, for example, a polycarbonate.

The intermediate layers 6A, 6B, 6C, 8 are formed of polymeric materials and function as adhesion layers between the sheets 4A, 5A, 4B, 5B, 9. The first, second and fourth intermediate layers 6A, 6B, 6C are formed, preferably, but not necessarily, of polyvinyl butyral, while the third intermediate layer 8 is formed, preferably, but not necessarily, of polyurethane.

Additionally, the structure of the bulletproof glass comprises a first and a second filling layer 7A, 7B, the first filling layer 7A being interposed between the outermost sheet 4A and the second intermediate sheet 4B and the second filling layer 7B being interposed between the second intermediate sheet 4B and the innermost sheet 9, on which rest the first intermediate sheet 5A and the third intermediate sheet 5B, respectively. The first and second filling layers 7A, 7B are formed of a polymeric or ceramic material, for example, a polyvinyl butyral or glass.

The third intermediate metallic layer 5B, in addition to conferring ballistic resistance on the edge region of the glazing, has an anti-explosion function, which is to say, in case of attack, the third intermediate layer 5B enables the retention of the glazing in the grooves and channels of the application, preventing its separation, either inside or outside the passenger compartment/vehicle.

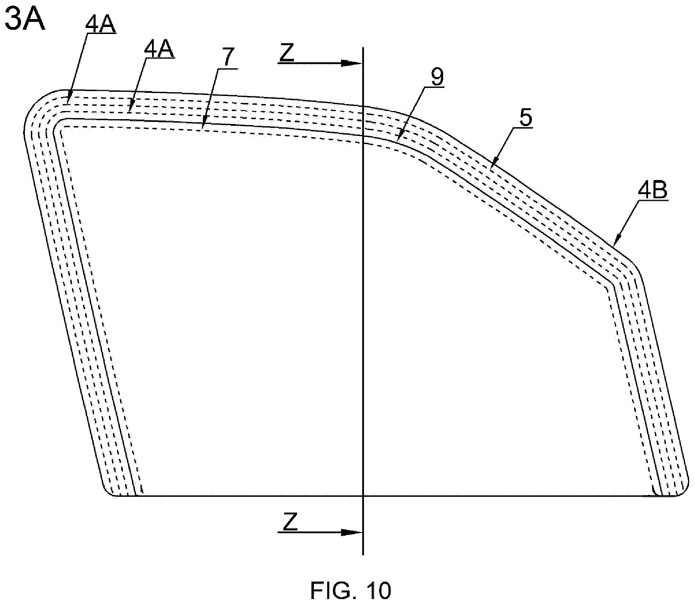

Referring to figures 10 to 12, a fourth constructive configuration of the bulletproof glazing of this invention is illustrated.

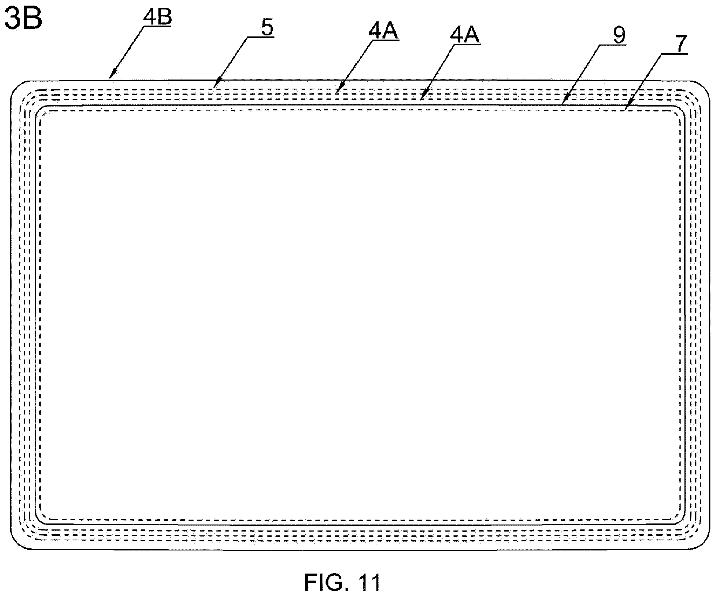

In particular, Figure 10 refers to a third example of mobile or fixed lateral glazing 3A applied to a vehicle door and Figure 11 refers to a third example of mobile or fixed upper glazing 3B applied to a vehicle roof.

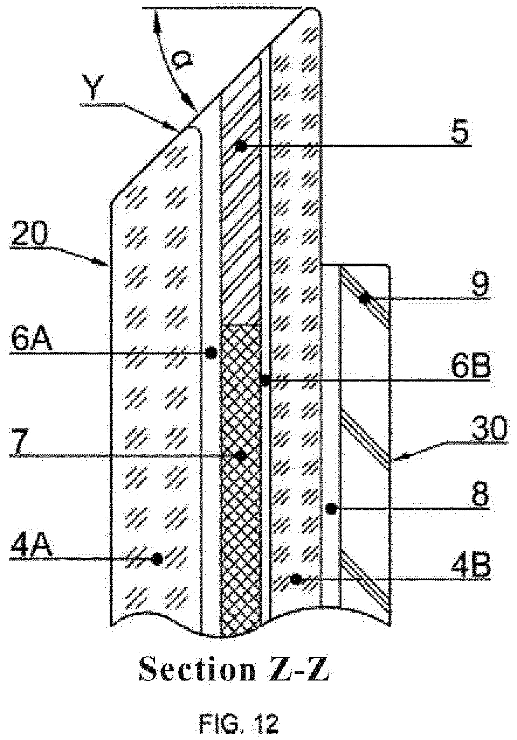

Figure 12 illustrates a Z-Z cross-section view, shown in Fig-ure 10, defining the fourth constructive configuration of the bulletproof glass of the present invention, constructive variant 4, comprising the outer surface 20 facing the outside of the vehicle and the inner surface 30 facing the inside of the vehicle, the glazing comprising a combination of sheets 4A, 5, 4B, 9 of different materials and intermediate layers 6A, 6B, 8 interposed between the sheets 4A, 5, 4B, 9, similar to the first constructive configuration. Similarly, the fourth constructive configuration comprises the filling layer 7.

As can be seen in Figure 12, in the fourth constructive configuration of the glazing of the present invention, the chamfer Y, previously located only in the outermost sheet 4A, is now incorporated into the outermost sheet 4A and extends to the second intermediate sheet 4B, configuring a continuous chamfer Y ending in a top end portion of the second intermediate sheet 4B.

Figures 10 and 11 illustrate the third example of side glazing 3A and upper glazing 3B presenting a semi-perimeter/perimeter equipped with a continuous chamfer Y from the outermost sheet 4A to the second intermediate sheet 4B and a semi-perimeter/perimeter of the innermost sheet 9. It is observed that in the case of the side glazing 3A, the chamfer Y is positioned in part of the perimeter, while in the case of the upper glazing 3B, the chamfer Y is located in the entire perimeter.

It should be noted that the ballistic composition of the glazing can comprise different materials, in different orders and/or positions of application, such that the present invention provides for the construction of the chamfer Y formed by the angle α, the angle α facing the upper surface of the glazing.

Additionally, the ballistic composition of the glazing of the present invention comprises at least one intermediate sheet 5, 5A, 5B of an insert or metallic support, which confers the necessary ballistic resistance on the application.

The solution presented by the present invention is applicable to any composition or ballistic solution, regardless of the materials, their sequence of application, individual thicknesses or even the resulting final thickness.

Moreover, the solution of the present invention can be applied to mobile or fixed glazing.

Having described an example of a preferred embodiment, it should be understood that the scope of the present invention covers other possible variations, being limited only by the content of the attached claims.

## Claims

1. Bulletproof glazing for use in vehicles, defining an external surface (20) for facing the outside of a vehicle and an internal surface (30) for facing the inside of the vehicle, the glazing comprising a combination of sheets (4A, 5, 4B, 9) of different materials and intermediate layers (6A, 6B, 8) interposed between the sheets (4A, 5, 4B, 9), comprising an outermost sheet of glass (4A) and an innermost sheet (9) formed of an anti-shatter material, wherein
the combination of sheets (4A, 5, 4B, 9) comprises at least a first intermediate sheet (5) constituting an insert or support of metallic material and a second intermediate sheet of glass (4B), and
it possesses a chamfer (Y) at least in the outermost sheet (4A), the chamfer (Y) defining an angle (α) which faces the outer surface (20) of the glazing (1),
wherein the first intermediate sheet (5) rests on a filling layer (7) that is disposed between the outermost sheet (4A) and the second intermediate sheet (4B).

2. Glazing, in accordance with claim 1, **characterized by** the fact that the chamfer (Y) is wedge-shaped.

3. Glazing, in accordance with claim 1, **characterized by** the fact that the angle (α) ranges from 30° to 75°, being preferably equal to 60°.

4. Glazing, in accordance with claim 1, **characterized by** the fact that the chamfer (Y) is positioned in part of the perimeter of the glazing (1).

5. Glazing, in accordance with claim 1, **characterized by** the fact that the chamfer (Y) is located in the entire perimeter of the glazing (1).

6. Glazing, in accordance with claim 1, **characterized by** the fact that the innermost sheet (9) is formed of a polymeric material.

7. Glazing, in accordance with claim 6, **characterized by** the fact that the innermost sheet (9) is a polycarbonate.

8. Glazing, in accordance with claim 1, **characterized by** the fact that the intermediate layers (6A, 6B, 8) comprise a first (6A), a second (6B) and a third (8) intermediate layers that are adhesion layers formed of polymeric materials.

9. Glazing, in accordance with claim 8, **characterized by** the fact that the first and second intermediate layers (6A, 6B) are formed of polyvinyl butyral and the third intermediate layer (8) is formed of polyurethane.

10. Glazing, in accordance with claim 1, **characterized by** the fact that it has a setback distance (X), measured from the separation of a portion of the upper end of the outermost sheet (4A) from the edge of the glazing.

11. Glazing, in accordance with claim 1, **characterized by** the fact that it comprises a third intermediate sheet (5B) that corresponds to an additional metal insert or support.

12. Glazing, in accordance with claim 1, **characterized by** the fact that the chamfer (Y) is positioned from the outermost sheet (4A) and extends to the second intermediate sheet (4B), configuring a continuous chamfer (Y) that ends in an upper end portion of the second intermediate sheet (4B).

13. Glazing, in accordance with claim 1, **characterized by** the fact that the outermost sheet (4A) comprises the external surface (20), and the innermost sheet (9) comprises the internal surface (30).

## Patentansprüche

1. Kugelsichere Verglasung zur Verwendung in Fahrzeugen, die eine äußere Oberfläche (20), die der Außenseite eines Fahrzeugs zugewandt ist, und eine innere Oberfläche (30), die der Innenseite des Fahrzeugs zugewandt ist, definiert, wobei die Verglasung eine Kombination von Scheiben (4A, 5, 4B, 9) aus verschiedenen Materialien und Zwischenschichten (6A, 6B, 8) umfasst, die zwischen den Scheiben (4A, 5, 4B, 9) angeordnet sind, umfassend eine äußerste Glasscheibe (4A) und eine innerste Scheibe (9), die aus einem Antisplittermaterial gebildet ist, wobei
die Kombination von Scheiben (4A, 5, 4B, 9) mindestens eine erste Zwischenscheibe (5), die eine Einlage oder einen Träger aus metallischem Material bildet, und eine zweite Zwischenscheibe aus Glas (4B) umfasst und
sie mindestens in der äußersten Scheibe (4A) eine Abschrägung (Y) aufweist, wobei die Abschrägung (Y) einen Winkel (α) definiert, der der Außenfläche (20) der Verglasung (1) gegenüberliegt,
wobei die erste Zwischenscheibe (5) auf einer Füllschicht (7) ruht, die zwischen der äußersten Scheibe (4A) und der zweiten Zwischenscheibe (4B) angeordnet ist.

2. Verglasung nach Anspruch 1, **dadurch gekennzeichnet, dass** die Abschrägung (Y) keilförmig ist.

3. Verglasung nach Anspruch 1, **dadurch gekennzeichnet, dass** der Winkel (α) zwischen 30° und 75° liegt, wobei er vorzugsweise 60° beträgt.

4. Verglasung nach Anspruch 1, **dadurch gekennzeichnet, dass** die Abschrägung (Y) in einem Teil des Umfangs der Verglasung (1) angeordnet ist.

5. Verglasung nach Anspruch 1, **dadurch gekennzeichnet, dass** sich die Abschrägung (Y) im gesamten Umfang der Verglasung (1) befindet.

6. Verglasung nach Anspruch 1, **dadurch gekennzeichnet, dass** die innerste Platte (9) aus einem polymeren Material besteht.

7. Verglasung nach Anspruch 6, **dadurch gekennzeichnet, dass** die innerste Platte (9) ein Polycarbonat ist.

8. Verglasung nach Anspruch 1, **dadurch gekennzeichnet, dass** die Zwischenschichten (6A, 6B, 8) eine erste (6A), eine zweite (6B) und eine dritte (8) Zwischenschicht umfassen, die Adhäsionsschichten aus polymeren Materialien sind.

9. Verglasung nach Anspruch 8, **dadurch gekennzeichnet, dass** die erste und die zweite Zwischenschicht (6A, 6B) aus Polyvinylbutyral und die dritte Zwischenschicht (8) aus Polyurethan gebildet sind.

10. Verglasung nach Anspruch 1, **dadurch gekennzeichnet, dass** sie einen Rücksprungabstand (X) aufweist, gemessen ab dem Abstand eines Teils des oberen Endes der äußersten Scheibe (4A) vom Rand der Verglasung.

11. Verglasung nach Anspruch 1, **dadurch gekennzeichnet, dass** sie eine dritte Zwischenscheibe (5B) umfasst, die einem zusätzlichen Metalleinsatz oder -träger entspricht.

12. Verglasung nach Anspruch 1, **dadurch gekennzeichnet, dass** die Abschrägung (Y) von der äußersten Scheibe (4A) ausgeht und sich bis zur zweiten Zwischenscheibe (4B) erstreckt, wodurch eine durchgehende Abschrägung (Y) konfiguriert wird, die in einem oberen Endabschnitt der zweiten Zwischenscheibe (4B) endet.

13. Verglasung nach Anspruch 1, **dadurch gekennzeichnet, dass** die äußerste Scheibe (4A) die Außenfläche (20) umfasst und die innerste Scheibe (9) die Innenfläche (30) umfasst.

## Revendications

1. Vitrage pare-balles pour une utilisation dans des véhicules, définissant une surface externe (20) pour être face à l'extérieur d'un véhicule et une surface interne (30) pour être face à l'intérieur du véhicule, le vitrage comprenant une combinaison de feuilles (4A, 5, 4B, 9) de différents matériaux et de couches intermédiaires (6A, 6B, 8) interposées entre les feuilles (4A, 5, 4B, 9), comprenant une feuille de verre la plus externe (4A) et une feuille la plus interne (9) formée d'un matériau anti-éclat, dans lequel
la combinaison de feuilles (4A, 5, 4B, 9) comprend au moins une première feuille intermédiaire (5) constituant une insertion ou un support de matériau métallique et une deuxième feuille intermédiaire de verre (4B), et
il possède un chanfrein (Y) au moins dans la feuille la plus externe (4A), le chanfrein (Y) définissant un angle (α) qui est face à la surface externe (20) du vitrage (1),
dans lequel la première feuille intermédiaire (5) repose sur une couche de remplissage (7) qui est disposée entre la feuille la plus externe (4A) et la deuxième feuille intermédiaire (4B).

2. Vitrage, selon la revendication 1, **caractérisé par le fait que** le chanfrein (Y) est cunéiforme.

3. Vitrage, selon la revendication 1, **caractérisé par le fait que** l'angle (α) se situe dans une plage de 30° à 75°, étant de préférence égal à 60°.

4. Vitrage, selon la revendication 1, **caractérisé par le fait que** le chanfrein (Y) est positionné dans une partie du périmètre du vitrage (1).

5. Vitrage, selon la revendication 1, **caractérisé par le fait que** le chanfrein (Y) est situé dans le périmètre entier du vitrage (1).

6. Vitrage, selon la revendication 1, **caractérisé par le fait que** la feuille la plus interne (9) est formée d'un matériau polymère.

7. Vitrage, selon la revendication 6, **caractérisé par le fait que** la feuille la plus interne (9) est un polycarbonate.

8. Vitrage, selon la revendication 1, **caractérisé par le fait que** les couches intermédiaires (6A, 6B, 8) comprennent une première (6A), une deuxième (6B) et une troisième (8) couche intermédiaire qui sont des couches d'adhérence formées de matériaux polymères.

9. Vitrage, selon la revendication 8, **caractérisé par le fait que** les première et deuxième couches intermédiaires (6A, 6B) sont formées de polyvinyl butyral et que la troisième couche intermédiaire (8) est formée de polyuréthane.

10. Vitrage, selon la revendication 1, **caractérisé par le fait qu'**il présente une distance de retrait (X), mesurée à partir de la séparation d'une portion de l'extrémité supérieure de la feuille la plus externe (4A) du bord du vitrage.

11. Vitrage, selon la revendication 1, **caractérisé par le fait qu'**il comprend une troisième feuille intermédiaire (5B) qui correspond à un(e) insertion ou support métallique additionnel(le).

12. Vitrage, selon la revendication 1, **caractérisé par le fait que** le chanfrein (Y) est positionné à partir de la feuille la plus externe (4A) et s'étend jusqu'à la deuxième feuille intermédiaire (4B), configurant un chanfrein (Y) continu qui se termine dans une portion d'extrémité supérieure de la deuxième feuille intermédiaire (4B).

13. Vitrage, selon la revendication 1, **caractérisé par le fait que** la feuille la plus externe (4A) comprend la surface externe (20), et la feuille la plus interne (9) comprend la surface interne (30).
